# EUROPÄISCHE PATENTANMELDUNG

(11) **EP 1 594 058 A1**
(43) Veröffentlichungstag der Anmeldung: **09.11.2005**
(21) Anmeldenummer: 04010982.9
(22) Anmeldetag: 08.05.2004
(51) Int. Cl.: G06F 9/46, H04L 29/08

(54) **Netzwerk und Verfahren zur Datenübermittlung zwischen Applikationen mit prorietären Schnittstellen**

(71) Anmelder: Siemens Schweiz AG, 8047 Zürich (CH)
(72) Erfinder: Gaël, Jeanneret, 5034 Suhr (CH); De Pascale, Pierre, 1196 Gland (CH); Studer, Horst, 8002 Zürich (CH); Akeret, Felix, 8182 Hochfelden (CH)
(74) Vertreter: Fischer, Michael

(57) **Zusammenfassung**

Auf der Architektur CORBA basierende Anordnungen zur Datenübermittlung zwischen proprietären Datenquellen und Datensenken weisen den Nachteil auf, dass für neue anzubindende Applikation (101, 102; 201, 202) ein grosser Aufwand geleistet werden muss. Dazu ist es vorgesehen, dass die Requests/Responses als XML-Nachrichten ausgebildet sind.

Erfindungsgemäss ist ein Netzwerk (40) zur Datenübermittlung zwischen Applikationen (101, 102; 201, 202) mit proprietären Schnittstellen vorgesehen, wobei
a) die Applikationen und/oder die ihnen zugeordneten Daten an Standorten (42 bis 50) mit unterschiedlichen Installationstypen (I bis IV) verarbeitbar sind,
b) die Applikationen über einen Databroker (1) für die Datenübermittlung koppelbar sind,
c) die Datenübermittlung mittels Requests und Responses über den Databroker (1) durchführbar ist,
d) die Requests/Responses als XML-Nachrichten ausgebildet sind,
e) die verschiedenen Standorte (42 bis 50) mit unterschiedlichen Installationstypen (I bis IV) im Bezug auf ihre Einbindung in das Netzwerk (40) vom Installationstyp (I bis IV) abhängige Kompetenzen im Bezug auf die Speicherung und/oder die Verteilung von Daten für die Applikationen haben.

## Beschreibung

Die vorliegende Erfindung betrifft ein Netzwerk und ein Verfahren zur Datenübermittlung zwischen Applikationen mit proprietären Schnittstellen nach dem Oberbegriff des Patentanspruchs 1 bzw. des Patentanspruchs 4.

Die vorliegende Erfindung ist auf dem Gebiet der Informations- und Kommunikationstechnologie angesiedelt. Bedingt durch die sehr vielfältigen Anforderungen in dieser Technologie sind in integrierten Systemen Computer und zugeordnete Anwendungen von verschiedensten Herstellern zu vernetzen.

Vom Gremium OMG wurde dazu die Architektur CORBA spezifiziert, über die die verschiedenen Anwendungen - auch Applikationen genannt - kommunizieren können. Sogenannte CORBA Applikationen bestehen aus einem oder mehreren Objekten, die ein Abbild eines oder mehrer realer Vorgänge - eine Funktion und zugeordnete Daten - repräsentieren. Jedem Objekt ist dabei ein Typ zugeordnet. Üblicherweise gibt es mehrere Instanzen eines Objektes. Eine E-Commerce Web-Applikation besteht aus denjenigen Instanzen, die dem Warenkorb der momentanen Anwender bzw. Kunden dieser Web-Applikation entsprechen. Für die Spezifikation der Architektur CORBA wird auf das Dokument [1] verwiesen.

Für jeden Objekttyp ist abhängig von der jeweiligen Laufumgebung eine Schnittstellendefinition notwendig. Die Applikationen haben auf CORBA-Vorgaben abgestützte Schnittstellen, welche in der CORBA-IDL (Interface Definition Language) definiert und dann in die verschiedenen Implementationssprachen der Zielsysteme übersetzt und implementiert werden. Der grosse Vorteil der CORBA basierten Produkte ist dabei die sprachenübergreifende, plattformübergreifende und für heterogene Systeme geeignete Funktionsweise.

In der Praxis hat sich gezeigt, dass die vorgenannte Architektur einen Datenaustausch zwischen verschiedenen Datenquellen und Datensenken auf zuverlässige und zweckmässige Weise erlauben und zwar auch dann, wenn die betreffenden Schnittstellen hochgradig proprietär sind. Nachteilig ist jedoch, dass für neue anzubindende Applikation ein grosser Aufwand geleistet werden muss.

In der internationalen Patentanmeldung PCT/EP03/01982 werden zur Lösung dieser Aufgabe eine Anordnung und ein Verfahren zur Datenübermittlung von Applikationen mit proprietären Schnittstellen vorgeschlagen, bei denen die Applikationen über einen Databroker für die Datenübermittlung koppelbar sind und die Datenübermittlung mittels Requests und Responses über den Databroker durchführbar ist und die Requests/Responses als XML-Nachrichten ausgebildet sind. Auf diese Weise können in einem hohen bedienerfreundlichen Masse Anpassungen und das Einbinden neuer Applikationen in ein bestehendes Netzwerk vorgenommen werden, ohne dass die bestehenden Applikationen genauere Kenntnisse von dem Aufbau der nachfolgend eingebundenen oder angepassten Applikationen haben müssen, wenn sie mit diesen zwecks der Erledigung ihrer bestimmungsgemässen Aufgabe kommunizieren wollen.

Derzeit ungelöst ist es jedoch, in diesem Umfeld die Organisation des Datenaustausches in einer Weise zu lösen, dass bestimmte Applikationen auch autark betrieben werden können, wenn die Datenverbindungen innerhalb des Netzwerks gestört oder gar unterbrochen sind.

Der Erfindung liegt daher die Aufgabe zugrunde, ein Netzwerk und ein Verfahren anzugeben, die es bei Störungen des Netzwerkes ermöglichen, bestimmte, ggfs. sogar in einem Funktionszusammenhang stehende Applikationen dennoch zur Gewährleistung deren Funktion aufrechtzuerhalten.

Diese Aufgabe wird bezüglich des Netzwerkes erfindungsgemäss gelöst durch ein Netzwerk zur Datenübermittlung zwischen Applikationen mit proprietären Schnittstellen, wobei
a) die Applikationen und/oder die ihnen zugeordneten Daten an Standorten mit unterschiedlichen Installationstypen verarbeitbar sind,
b) die Applikationen über einen Databroker für die Datenübermittlung koppelbar sind,
c) die Datenübermittlung mittels Requests und Responses über den Databroker durchführbar ist,
d) die Requests/Responses als XML-Nachrichten ausgebildet sind, und
e) die verschiedenen Standorte mit unterschiedlichen Installationstypen im Bezug auf ihre Einbindung in das Netzwerk vom Installationstyp abhängige Kompetenzen im Bezug auf die Speicherung und/oder die Verteilung von Daten für die Applikationen haben.

Die vorstehende Aufgabe wird bezüglich des Verfahrens erfindungsgemäss gelöst durch ein Verfahren zur Datenübermittlung zwischen Applikationen mit proprietären Schnittstellen, wobei
a) die Applikationen und/oder die ihnen zugeordneten Daten an Standorten mit unterschiedlichen Installationstypen verarbeitet werden,
b) die Applikationen über einen Databroker für die Datenübermittlung gekoppelt werden,
c) die Datenübermittlung mittels Requests und Responses über den Databroker erfolgt,
d) die Requests/Responses als XML-Nachrichten ausgebildet sind, und
e) den verschiedenen Standorten mit unterschiedlichen Installationstypen im Bezug auf ihre Einbindung in das Netzwerk vom Installationstyp abhängige Kompetenzen im Bezug auf die Speicherung und/oder die Verteilung von Daten für die Applikationen zugewiesen werden.

Auf diese Weise werden die verschiedenen Standorte für deren vorgesehene funktionelle Aufgabe definierbar gemacht, so dass einem Standort bestimmte funktionsspezifische Applikationen zugewiesen werden können. Die innerhalb des Netzwerkes zu erfüllenden funktionellen Aufgaben können so durch die Definition von Standorten mit Installationstypen entsprechend der Anforderung an den jeweiligen Datenbedarf und die jeweilige Priorisierung für einen Austausch der Daten hierarchisch gegliedert werden. Auf diese Weise ist es sichergestellt, dass für jeden Standorte die zur Erfüllung seiner bestimmungsgemässen funktionellen Aufgabe erforderlichen Daten eindeutig zur Verfügung stehen.

In einer zweckmässigen, vergleichsweise einfach administrierbaren Ausgestaltung der Erfindung können vier unterschiedliche Installationstypen vorgesehen sein, wobei
a) ein erster Installationstyp einen zentralen Server mit zentraler Datenbank, einen lokalen Server mit einer lokalen Datenbank, einen zentralen Diensteserver sowie in ein lokales Netzwerk eingebundene Clients umfasst;
b) ein zweiter Installationstyp einen lokalen Server mit einer lokalen Datenbank, ggfs. beide vorstehend genannten Einheiten in redundanter Ausführung, sowie in ein lokales Netzwerk eingebundene Clients umfasst;
c) ein dritter Installationstyp in ein lokales Netzwerk eingebundene Clients umfasst; und
d) ein vierter Installationstyp mindestens einen mobilen Client umfasst, wobei die hierarchische Zuordnung wie folgt vorgesehen ist:
e) der dritte und der vierte Installationstyp greifen auf den zweiten Installationstypen zu;
f) der zweite Installationstyp umfasst ein Datenabbild des ersten Installationstyps, welches der zweite Installationstyp aber nicht berechtigt ist, zu modifizieren; und
g) nur im ersten Installationstyp Einträge in die zentrale Datenbank sowie ggfs. weitere redundante zentrale Datenbanken vornehmbar sind.

Eine hierzu ergänzende Massnahme kann es vorsehen, dass der Diensteserver zentrale Authentisierungs-, einen Naming- und einen Notification-Dienste bereitstellt.

Weitere vorteilhafte Ausgestaltungen der Erfindung sind den übrigen Unteransprüche zu entnehmen.

Die Erfindung wird nachfolgend anhand einer Zeichnung beispielsweise näher erläutert. Dabei zeigen:
- Figur 1: Übersicht der Anordnung von verschiedenen Applikation, die über einen auf CORBA basierenden Databroker Daten austauschen; und
- Figur 2: ein gemäss der Anordnung nach Figur 1 arbeitendes Kommunikationsnetzwerk mit mehreren Standorten unterschiedlichen Installationstyps.

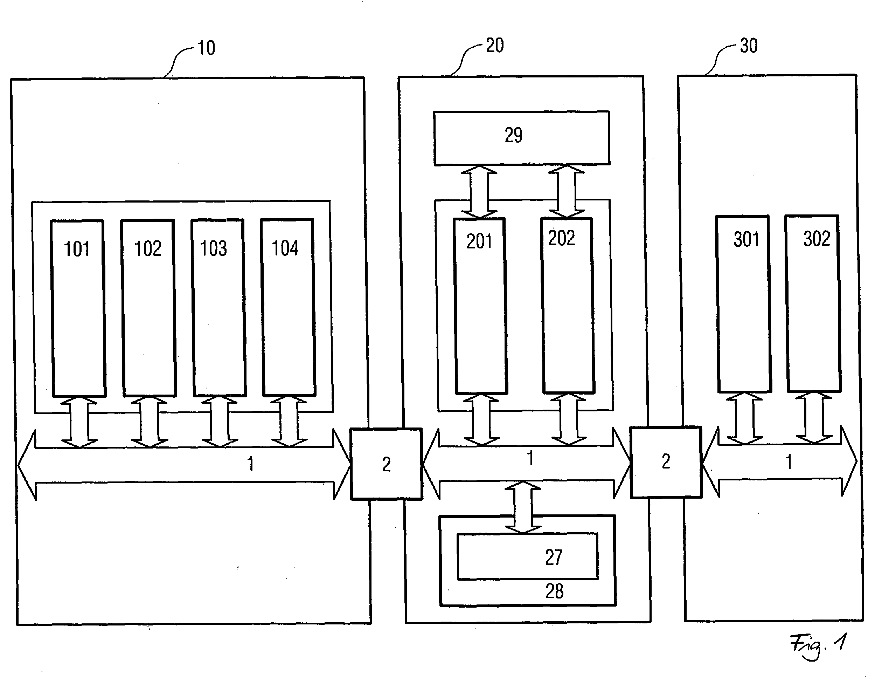

Das nachfolgende Ausführungsbeispiel betrifft ein integriertes Wetterdienst-System. Figur 1 zeigt eine Übersicht der Anordnung von verschiedenen Applikation, die über einen auf CORBA basierenden Databroker 1 Daten austauschen,. Der Databroker ist dabei als CORBA/ORB-Datenbroker ausgebildet. Mit dem Bezugszeichen 10 sind sogenannte Umsysteme bezeichnet. Die einzelnen Umsysteme 101, 102 usw. stehen beispielsweise für ein Wetterdatenbewertungssystem, für ein Kommunikationssystem zur Erfassung von Bodenluftdruck- und - temperaturdaten, usw. Umsysteme sind dabei die erforderlichen Teilsysteme und dienen somit der Unterstützung der von dem Wetterdienst-System zu erfüllenden Aufgabe. Mit dem Bezugszeichen 20 sind sogenannte Eingriffsysteme bezeichnet.

Die einzelnen Eingriffsysteme 201, 202 stehen dabei beispielsweise für die Steuerung des Einsatzes von mobilen Wetterstationen, wie aufsteigende Wetterballons, sowie die generelle Steuerung von automatischen Wetterstationen. Von der Anwendung her sind die vorgenannten zwei Eingriffsysteme 201, 202 über ein Portal 29 zugänglich. Hilfssysteme 30 beinhalten z.B. einen Notifikationsdienst 301, eine Workflow Engine 302, einen Namensdienst usw.

Umsysteme und Eingriffsysteme sind dabei natürlich nicht an einem Ort angeordnet, sondern in der Regel über ein Gebiet, wie z.B. ein Land, verteilt. Um den Zugriff auf die Daten wirksam hinsichtlich Integrität der Daten und Wahrung der Vertraulichkeit der Daten zu schützen, ist der Databrokern 1 durch sogenannte Dataguards 2 unterteilt. Diesen Dataguards 2 kommt die Funktion einer Firewall zu. Davon zu unterscheiden ist eine Verschlüsselung, die weiter unten beschrieben wird.

Die dem Wetterdienst-System zugehörigen Daten werden in einer einer relationalen Datenbank 27 gehalten; Zugriff und Administration erfolgen über einen Datamanager 28.

Da die Umsysteme und die Eingriffssysteme in der Regel eben verteilt angeordnet sind und auf ihnen zur Erfüllung ihrer jeweiligen Funktion bestimmte Applikationen durchgeführt werden müssen, auch wenn beispielsweise Datenverbindungen gestört oder unterbrochen sind, ist es vorgesehen, dass bestimmte logische Standorte definiert werden, denen unterschiedliche Installationstypen zugeordnet sind. Mit einem Installationstyp ist dabei sehr allgemein ein in sich abgeschlossenes Gebilde von Hardwaregruppen, Software-Gruppen und Berechtigungen zu verstehen. Ein Standort mit einem bestimmten Installationstyp weist daher eine entsprechende definitionsgemässe Struktur bezüglich der oben genannten Merkmale auf.

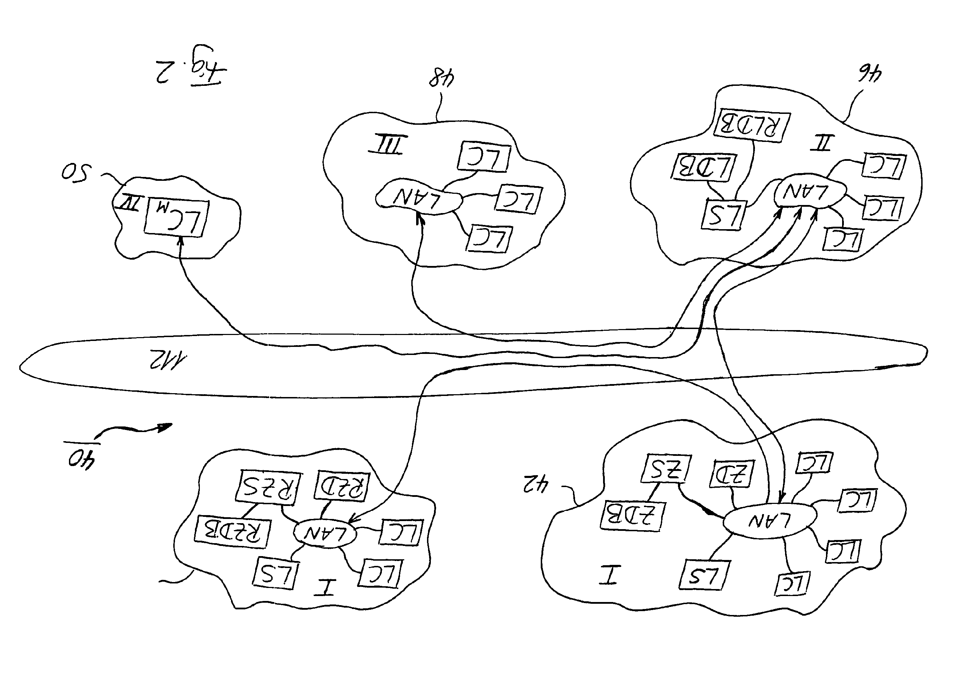

Figur 2 zeigt nun in schematischer Darstellung ein gemäss der Anordnung nach Figur 1 arbeitendes Kommunikationsnetzwerk 40 mit mehreren Standorten 42 bis 50, die unterschiedliche Installationstypen I, IIa, IIb, III und IV aufweisen und über ein Datenübertragungssystem 112 miteinander verbunden sind.

Der logische Standort 42 soll für das Wetterdienst-System der Hauptstandort sein, an dem beispielsweise Grossrechner angeordnet sind, die aus den im Standort 42 eingehenden Daten der übrigen Standorte 44 bis 50 Wetterprognosen und Klimaanalysen errechnet und an die Nutzer (Abonnenten) dieser Ergebnisdaten weiterverteilt werden. Dieser Standtyp 42 umfasst aufgrund seines Installationstyps I einen zentralen Server ZS mit einer zentralen Datenbank ZDB und einem zentralen Diensteserver ZD. Ein lokaler Server LS, der über ein lokales Netzwerk LAN mit dem zentralen Server ZS und lokalen Clients LC kommuniziert, ist dabei so ausgestaltet, dass die für diesen Standort 42 erforderlichen Applikationen auf diesem lokalen Server LS administriert und ausgeführt werden.

Ein wesentliches Merkmal dieses Installationstyps I ist die ausschliessliche Befugnis des zentralen Servers ZS Daten in die zentrale Datenbank ZS zu schreiben bzw. aus ihr auszulesen. Dies heisst zwar, dass eine dem lokalen Server LS zugeordnete lokale Datenbank ein Abbild der zentralen Datenbank enthalten kann, massgeblich ist aber die vom zentralen Server ZS administrierte zentrale Datenbank ZDB.

Der Standort 44 ist ebenfalls mit einem Installationstyp I ausgestattet, wobei dieser Standort 44 hinsichtlich seiner zentralen Komponenten als Redundanz zum Standort 42 ausgestaltet sind. Redundant sind dabei im einzelnen der redundante zentrale Server RZS, die redundante zentrale Datenbank RZDB und der redundante zentrale Diensteserver RZD. Sollte es als aufgrund einer Störung zu einem partiell relevanten oder totalen Ausfall des Standorts 102 kommen, kann das Kommunikationsnetzwerk unmittelbar auf den Standort 44 mit dessen zentralen Funktionalitäten zurückgreifen. Möglicherweise können in einem solchen Zustand auch andere Standorte, hier noch der Standort 46, als vorübergehende Redundanz zum Standort 44 ausgestattet werden bis der Standort 42 wieder voll einsatzfähig ist und der Standort 44 dann wieder in die Redundanzabsicherung zurückgestellt wird.

Der vorstehend bereits angesprochene Standort 46 ist mit einem Installationstyp IIa/b ausgestaltet, wobei sich der Installationstyp IIa auf eine Ausstattung ohne redundante lokale Datenbank RLDB und der Installationstyp IIb entsprechend mit redundanter lokaler Datenbank RLDB bezieht. Im vorliegenden Fall ist also der Installationstyp IIb dargestellt. Ansonsten umfassen alle Installationstypen II ein lokales Netzwerk LAN, in das lokale Clients LC und der lokale Server LS mit seiner lokalen Datenbank LDB eingebunden sind. Ein derartiger Standort könnte beispielsweise eine regionale Wetterwarte sein, die die relevanten Wetterdaten einer Region einholt, die diesbezüglichen Wetterstationen steuert, vorläufige regionale Wetter- und Schneehöhen- und Lawinenbulletins erstellt und diese Daten grundsätzlich auf der lokalen Datenbank LDB speichert und nur eine bestimmte Auswahl dieser Daten an den zentralen Server ZS im Standort 42 übermittelt, der wiederum entscheidet, welche dieser Daten in die zentrale Datenbank ZDB geschrieben werden.

Der Standort 48, der mit dem Installationstyp III ausgestattet, verfügt nur noch über ein lokales Netzwerk LAN und daran angeschlossene lokale Clients LC. Die für diesen Standort 48 benötigten Applikationen befinden sich auf einem Standort mit dem Installationstyp IIa oder IIb, also hier auf dem lokalen Server LS des Standorts 46. Daten dieses Standorts 48, die möglicherweise am Standort 42 benötigt werden, können dorthin nur über den lokalen Server LS des Standorts 46 gelangen. Daten von der zentralen Datenbank ZDB kann daher der Standort 48 auch nur über den lokalen Server LS des Standorts 46 abrufen. Eine mögliche Funktion für einen derartigen Standort im Rahmen dieses Wetterdienst-Systems könnte die Funktion einer automatischen, vor Ort parametrierbaren Wetterstation sein.

Der vierte in diesem Ausführungsbeispiel vorgesehene Installationstyp IV ist am Standort 50 verwirklicht. Dieser Standort verfügt nur noch über einen (mobilen) lokalen Client LC_{M}, also beispielsweise einen Wetterballon, der zu bestimmten Zeiten an einem abgesetzten Einsatzort zum Aufsteigen gebracht wird und seine Daten direkt an einen lokalen Server LS eines Installationstyps II, also hier an den Standort 46, sendet.

Aufgrund dieser Gliederung des gesamten Systems 40 in logische (virtuelle oder physikalische Standorte) Standorte 42 bis 50 mit den entsprechenden Installationstypen I bis IV ist eine hohe Verfügbarkeit der jeweils in einem Standort konzentrierten Funktionalitäten erreicht. Ausfälle einzelner Standorte bedrohen daher das System als Ganzes nicht, sondern können vorübergehend tolierbar sein, bis bei Störungszuständen die ursprüngliche Struktur zumindest hilfsweise wieder abgebildet werden kann.

Das vorstehend am Beispiel des Wetterdienst-Systems erläuterte Kommunikationssystem kann auch in einer nahezu unbegrenzten Vielzahl für andere derart verteilte Systeme genutzt werden. Explizit genannt werden hier noch Systeme, die aus den E-Commerce-Bereichen A2A (Administration to Administration), A2B (Administration to Business) und A2C (Administration to Consumer) stammen können.

### Liste der verwendeten Bezugszeichen

- 1: DataBroker: CORBA/ORB
- 2: Firewall, Dataguard
- 10: Umsysteme
- 20: Eingriffsysteme
- 27: Database, Database RDBMS
- 28: DataManager
- 29: Portal
- 30: Hilfsysteme
- 40: Kommunikationsnetzwerk
- 42 bis 50: Standorte
- 101: Umsystem
- 102: Umsystem
- 103: Umsystem
- 104: Umsystem
- 201: Eingriffsystem
- 202: Eingriffsystem
- 301: Notifikationsdienst
- 302: Workflow Engine
- LAN: Lokales Netzwerk
- LC: Lokaler Client
- LC_{M}: Mobiler lokaler Client
- LDB: Lokale Datenbank
- LS: Lokaler Server
- RZD: Redundanter zentraler Diensteserver
- RZDB: Redundante zentrale Datenbank
- RZS: Redundanter zentraler Server
- ZD: Zentraler Diensteserver
- ZDB: Zentrale Datenbank
- ZS: Zentrale Server

### Liste der verwendeten Akronyme

CORBACommon Object Request Broker Architecture
- IDL: Interface Definition Language
- OMG: Object Management Group
- ORB: Object Request Broker
- RDBMS Relationales: Datenbankmanagmentsystem
- XML: Extensible Markup Language

### Literaturliste

[1] Common Object Request Broker Architecture: Core Specification, December 2002, Version 3.0

## Patentansprüche

1. Netzwerk (40) zur Datenübermittlung zwischen Applikationen (101, 102; 201, 202) mit proprietären Schnittstellen, wobei
a) die Applikationen und/oder die ihnen zugeordneten Daten an Standorten (42 bis 50) mit unterschiedlichen Installationstypen (I bis IV) verarbeitbar sind,
b) die Applikationen über einen Databroker (1) für die Datenübermittlung koppelbar sind,
c) die Datenübermittlung mittels Requests und Responses über den Databroker (1) durchführbar ist,
d) die Requests/Responses als XML-Nachrichten ausgebildet sind,
e) die verschiedenen Standorte (42 bis 50) mit unterschiedlichen Installationstypen (I bis IV) im Bezug auf ihre Einbindung in das Netzwerk (40) vom Installationstyp (I bis IV) abhängige Kompetenzen im Bezug auf die Speicherung und/oder die Verteilung von Daten für die Applikationen haben.

2. Netzwerk (40) nach Anspruch 1,
**dadurch gekennzeichnet, dass**
vier unterschiedliche Installationstypen (I bis IV) vorgesehen sind, wobei
a) ein erster Installationstyp (I) einen zentralen Server (ZS) mit zentraler Datenbank (ZDB), einen lokalen Server (LS) mit einer lokalen Datenbank (LDB), einen zentralen Diensteserver (ZD) sowie in ein lokales Netzwerk (LAN) eingebundene lokale Clients (LC) umfasst;
b) ein zweiter Installationstyp (II) einen lokalen Server (LS) mit einer lokalen Datenbank (LDB), ggfs. beide vorstehend genannten Einheiten in redundanter Ausführung, sowie in ein lokales Netzwerk (LAN) eingebundene Clients (LC) umfasst;
c) ein dritter Installationstyp (III) in ein lokales Netzwerk (LAN) eingebundene Clients (LC) umfasst; und
d) ein vierter Installationstyp (IV) mindestens einen mobilen Client (LC_{M}) umfasst, wobei die hierarchische Zuordnung wie folgt vorgesehen ist:
e) der dritte und der vierte Installationstyp (III bzw. IV) greifen auf den zweiten Installationstypen (II) zu;
f) der zweite Installationstyp (II) umfasst ein Datenabbild des ersten Installationstyps (I), welches der zweite Installationstyp (II) aber nicht berechtigt ist, zu modifizieren; und
g) nur im ersten Installationstyp (I) Einträge in die zentrale Datenbank (ZDB) sowie ggfs. weitere redundante zentrale Datenbanken (RZDB) vornehmbar sind.

3. Netzwerk (40) nach Anspruch 2,
**dadurch gekennzeichnet, dass**
der Diensteserver (ZD) zentrale Authentisierungs-, einen Naming- und einen Notification-Dienste bereitstellt.

4. Verfahren zur Datenübermittlung zwischen Applikationen (101, 102; 201, 202) mit proprietären Schnittstellen, wobei
a) die Applikationen über einen Databroker (1) für die Datenübermittlung gekoppelt sind,
b) die Datenübermittlung mittels Requests und Responses über den Databroker (1) erfolgt,
c) die Requests/Responses als XML-Nachrichten ausgebildet sind,
d) den verschiedenen Standorten (42 bis 50) mit unterschiedlichen Installationstypen (I bis IV) im Bezug auf ihre Einbindung in das Netzwerk (40) vom Installationstyp (I bis IV) abhängige Kompetenzen im Bezug auf die Speicherung und/oder die Verteilung von Daten für die Applikationen zugewiesen werden.

5. Verfahren nach Anspruch 4,
**dadurch gekennzeichnet, dass**
die Standorte (42 bis 50) einem von vier unterschiedlichen Installationstypen (I bis IV) zugewiesen werden, wobei
a) ein erster Installationstyp (I) einen zentralen Server (ZS) mit zentraler Datenbank (ZDB), einen lokalen Server (LS) mit einer lokalen Datenbank (LDB), einen zentralen Diensteserver (ZD) sowie in ein lokales Netzwerk (LAN) eingebundene Clients (LC) umfasst;
b) ein zweiter Installationstyp (II) einen lokalen Server (LS) mit einer lokalen Datenbank (LDB), ggfs. beide vorstehend genannten Einheiten in redundanter Ausführung, sowie in ein lokales Netzwerk (LAN) eingebundene Clients (LC) umfasst;
c) ein dritter Installationstyp (III) in ein lokales Netzwerk (LAN) eingebundene Clients (LC) umfasst; und
d) ein vierter Installationstyp (IV) mindestens einen mobilen Client (LC_{M}) umfasst,
wobei die hierarchische Zuordnung wie folgt vorgesehen ist:
e) der dritte und der vierte Installationstyp (III bzw. IV) greifen auf den zweiten Installationstypen (II) zu;
f) der zweite Installationstyp (II) umfasst ein Datenabbild des ersten Installationstyps (I), welches der zweite Installationstyp (II) aber nicht berechtigt ist, zu modifizieren; und
g) nur im ersten Installationstyp (I) Einträge in die zentrale Datenbank (ZDB) sowie ggfs. weitere redundante zentrale Datenbanken (RZDB) vorgenommen werden.

6. Netzwerk nach Anspruch 5,
**dadurch gekennzeichnet, dass**
im Diensteserver (ZD) ein zentraler Authentisierungs-, ein Naming- und ein Notification-Dienst bereitgestellt werden.
